# EUROPÄISCHE PATENTANMELDUNG

(11) **EP 0 665 265 A2**
(43) Veröffentlichungstag der Anmeldung: **02.08.1995**
(21) Anmeldenummer: 95100892.9
(22) Anmeldetag: 24.01.1995
(51) Int. Cl.: C08K 3/08, C08K 9/00

(54) **Zusammensetzungen, enthaltend Metallpartikel im Nanometergrössenbereich**

(30) Priorität: 01.02.1994 DE 4402873
(71) Anmelder: BASF AKTIENGESELLSCHAFT, D-67056 Ludwigshafen (DE)
(72) Erfinder: Fisch, Herbert, Dr., D-67157 Wachenheim (DE); Haas, Karl-Heinz, Dr., D-68199 Mannheim (DE); Bauer, Lothar, D-67551 Worms (DE)

(57) **Zusammenfassung**

Zusammensetzungen, enthaltend Metallpartikel im Nanometergrößenbereich als wesentliche Komponenten
A) Metallpartikel eines mittleren Durchmessers kleiner als 100 nm, berechnet als Zahlenmittelwert,
B) Polymere und
C) partikelförmiges Trägermaterial, erhältlich aus einem Sol des Trägermaterials.

## Beschreibung

Die vorliegende Erfindung betrifft Zusammensetzungen, die als wesentliche Komponenten
A) Metallpartikel eines mittleren Durchmessers von weniger als 100 nm, berechnet als Zahlenmittelwert,
B) Polymere und
C) partikelförmiges Trägermaterial, erhältlich aus einem Sol des Trägermaterials enthalten.

Darüber hinaus betrifft die vorliegende Erfindung ein Verfahren zur Herstellung dieser Zusammensetzungen sowie deren Verwendung.

Sehr feine Metallpartikel, in denen die Metalle in der Oxidationsstufe 0 vorliegen und die eine sehr enge Größenverteilung aufweisen, sind für viele Anwendungen, beispielsweise der Elektronik oder der Katalyse von Interesse.

Es war bekannt, daß Metallpartikel im Nanometergrößenbereich hergestellt werden können, wobei verschiedene Methoden angewandt werden können, um zu verhindern, daß sie sich zu größeren Teilchen zusammenlagern. So wurden in mehreren wissenschaftlichen Arbeiten der Einfluß verschiedener Polymerer wie Polyvinylpyridin oder Polyvinylpyrrolidon auf die Stabilität von Kupfer-, Silber- oder Goldpartikel, die kolloidal in Lösung vorlagen, untersucht. Filme, die Goldpartikel im Nanometergrößenbereich in einer polymeren Matrix enthalten, wurden von Kunz et al. J. Colloid and Interface Science (1993), 156, Seite 240, hergestellt. Hinweise darauf, daß bei der photochemischen Reduktion von Silbernitrat in Gegenwart von Titandioxid metallisches Silber gebildet wird, wurden von Clark et al. i. J. Catalysis (1965) 4, Seite 691, gefunden.

Die bislang bekannten Systeme sind entweder nur in Lösung beschrieben oder sind nur minder stabil. Ferner enthalten die bekannten Systeme die Metallpartikel nur in niedriger Konzentration. Auch kann die Metallpartikelgröße nicht zuverlässig gesteuert werden.

Aufgabe der vorliegenden Erfindung war es deshalb Zusammensetzungen, die Metallpartikel im Nanometergrößenbereich enthalten zur Verfügung zu stellen, die die genannten Nachteile nicht aufweisen.

Diese Aufgabe wird von den eingangs definierten Zusammensetzungen erfüllt.

### Komponente A

Als Komponente A enthalten die erfindungsgemäßen Zusammensetzungen Metallpartikel, die einen mittleren Durchmesser (Zahlenmittelwert) von weniger als 100 nm haben. Bevorzugt sind solche, die Metallpartikel mit einem mittleren Durchmesser (Zahlenmittelwert) von weniger als 70 nm, insbesondere weniger als 50 nm enthalten. Im allgemeinen weisen die Metallpartikel mittlere Durchmesser (Zahlenmittelwert) von 8 bis 30 nm auf. Die mittleren Durchmesser können aber auch geringfügig darunter liegen, beispielsweise bis 3 nm.

Im allgemeinen ist die Größenverteilung der Metallpartikel sehr eng. Bevorzugt werden monodisperse oder annähernd monodisperse Metallpartikel.

Als Metalle kommen prinzipiell alle Metalle in Betracht. Allerdings werden Übergangsmetalle bevorzugt. Besonders bevorzugt werden Übergangsmetalle der achten bis elften Gruppe des Periodensystems (JUPAC Bezeichnung 1985). Darunter sind insbesondere Eisen, Rhenium, Iridium, Palladium, Platin, Silber und Gold zu nennen. Selbstverständlich können auch Mischungen unterschiedlicher Metalle in den erfindungsgemäßen Zusammensetzungen enthalten sein.

Die Metallpartikel können z.B. dadurch erhalten werden, daß Metallsalze zu Metall der Oxidationsstufe Null reduziert werden. Vorzugsweise wird die Reduktion in Lösung ausgeführt, so daß insbesondere lösliche Metallsalze zur Herstellung der Metallpartikel verwendet werden. Darunter werden lösliche Nitrate, Halogenide oder Acetate bevorzugt. Besonders bevorzugt werden Nitrate und Chloride eingesetzt. Beispiele geeigneter Metallsalze sind AgNO₃, HAuCl₄, H₂PtCl₆, RhCl₆ oder PdCl₆. Es ist auch möglich, Mischungen unterschiedlicher Metallsalze einzusetzen, wodurch legierungsartige Metallpartikel erhalten werden können.

Als Lösungsmittel können beispielsweise Wasser, Alkohole, wie Methanol, Ethanol, n-Propanol, i-Propanol, n-Butanol, i-Butanol oder Amylalkohol, worunter Ethanol bevorzugt wird, oder Mischungen unterschiedlicher Lösungsmittel, insbesondere Mischungen von Wasser und Ethanol, verwendet werden.

Die Reduktion kann sowohl chemisch als auch photochemisch erfolgen. Dabei eignen sich anorganische ebenso wie organische Reduktionsmittel. Formaldehyd, Natriumcitrat, Hydrazin, oder Harnstoff sind Beispiele geeigneter Reduktionsmittel.

Besonders bevorzugt wird die Reduktion auf photochemischem Weg durchgeführt. Hierzu wird im allgemeinen die Metallsalzlösung mit energiereicher Strahlung, bevorzugt UV-Licht, bestrahlt. Die einwirkende energiereiche Strahlung kann entweder einen ausgewählten engen Wellenlängenbereich, beispielsweise eine bestimmte Wellenlänge, oder einen breiten Wellenlängenbereich umfassen. Als Strahlungsquelle können z.B. Quecksilberdampflampen, oder bevorzugt handelsübliche UV-Lampen dienen. In der Regel wird mit Licht der Wellenlänge von 300 bis 400 nm, bevorzugt von 320 bis 380 nm bestrahlt. Die Dauer der Bestrahlung ist unter anderem von der Konzentration der Lösung abhängig. In der Regel ist die Reduktion nach einer Bestrahlungsdauer von 0,5 bis 5 Stunden beendet.

Die Reduktion erfolgt im allgemeinen bei Raumtemperatur, kann aber auch bei etwas niedrigeren Temperaturen, beispielsweise bis 10°C oder bei etwas erhöhten Temperaturen z.B. bis 40°C ausgeführt werden.

In der Regel findet die Reduktion ohne Zugabe einer Säure oder Base statt.

Bevorzugte erfindungsgemäße Zusammensetzungen enthalten 1 bis 80 Gew.-% Metallpartikel. Besonders bevorzugte erfindungsgemäße Zusammensetzungen enthalten von 1 bis 20, insbesondere von 5 bis 15 Gew.-% Metallpartikel.

### Komponente B

Als weitere Komponente enthalten die erfindungsgemäßen Zusammensetzungen Polymere, worunter insbesondere Polymere, die entweder in ihren Haupt- oder Seitenketten polare Gruppen enthalten, geeignet sind.

Zu den bevorzugten Polymeren zählen Polyamide. Derartige Polyamide umfassen sowohl teilkristalline als auch amorphe Harze. Es können sowohl aliphatische als auch teilaromatische Polyamide oder Copolyamide eingesetzt werden. Bevorzugte Polyamide sind aliphatische Copolyamide, statistische teilaromatische Co- oder Homopolyamide oder auch ionisch modifizierte Copolyamide.

Besonders geeignet sind beispielsweise Copolyamide auf der Basis von Polyamiden, aufgebaut aus 1,6-Hexamethylendiamin und Adipinsäure (PA66) sowie Polyamiden, aufgebaut aus ε-Caprolactam (PA6) und Polyamiden deren Diaminkomponente z.B. 4,4-Bis-amino-di-(1,1-Cyclohexylen)methan und deren Säurenkomponente Adipinsäure ist (PA13 6). Die statistischen Copolyamide können z.B. PA66/PA6/PA13 6 im molaren Verhältnis von 1 : 1 : 1 enthalten.

Ebenso können Polystyrole oder deren Copolymere als Komponente B verwendet werden. Zu den geeigneten Polystyrolen zählen solche, die aus Styrol oder Styrolderivaten wie α-Methylstyrol, t-Butylstyrol oder Chlorstyrol hergestellt werden können.

Polyacrylate können ebenfalls als Komponente B in den erfindungsgemäßen Zusammensetzungen enthalten sein. Es sind vor allem Polymere auf der Basis von Alkylestern der Acrylsäure oder der Methacrylsäure zu nennen. Hierzu zählen die Methyl-, Ethyl-, n-Propyl-, i-Propyl, n-Butyl, i-Butyl oder t-Butylester. Bevorzugt werden Polymere auf der Basis der Butyl und vor allem der t-Butylester der Acrylsäure oder der Methacrylsäure. Daneben kommen Polymere auf der Basis von Alkylestern der Acrylsäure oder Methacrylsäure in Betracht, die am Ende der Alkylgruppe eine mono- oder disubstituierte Aminogruppe tragen, insbesondere (Dialkylamino)ethylmethacrylate. Darunter sind (Di-C₁-bis C₁₀-alkylamino)ethylmethacrylate besonders bevorzugt. Insbesondere eignen sich (Dimethylamino)ethylmethacrylat oder (Diethylamino)ethylmethacrylat.

Polymere und Copolymere von Vinylverbindungen wie N-Vinylcaprolactam, Vinylpyridin, N-Vinylpyrrolidon, Vinylamin, N-Vinylimidazol, N-Vinylmethylimidazol oder Vinylacetat können ebenso verwendet werden.

Darüber hinaus eignen sich Polyoxyalkylene, bevorzugt Polyoxymethylene als Komponente B in den erfindungsgemäßen Zusammensetzungen.

Eine andere Gruppe geeigneter Polymerer stellen die Polyarylenether dar. Darunter werden Polyphenylenether oder Polyarylenethersulfone bevorzugt. Insbesondere eignen sich mit polaren Gruppen wie OH- oder SO₃H-Gruppen funktionalisierte Polyarylenether, oder Polyarylenethersulfone.

Es können auch statistische oder Blockcopolymere sowie Mischungen unterschiedlicher Polymerer in den erfindungsgemäßen Zusammensetzungen enthalten sein. Ganz besonders bevorzugt werden Polyvinylpyrrolidon sowie Copolymere auf der Basis von Monomeren, ausgewählt aus der Gruppe N-Vinylpyrrolidon, N-Vinylcaprolactam, N-Vinylimidazol, Acrylsäurealkylester und Methacrylsäurealkylester.

Die Polymeren sind an sich bekannt und weisen im allgemeinen Molekulargewichte (Gewichtsmittelwert) von 20.000 bis 1.500.000, bevorzugt 40.000 bis 1.200.000 auf. Die Herstellung dieser Polymeren ist ebenfalls an sich bekannt, bzw. können diese Polymeren nach an sich bekannten Methoden hergestellt werden, so daß an dieser Stelle nur auf die einschlägige Literatur verwiesen wird.

Im allgemeinen beträgt der Anteil der Komponente B in den erfindungsgemäßen Zusammensetzungen 1 bis 98 Gew.-%, bevorzugt 10 bis 90 Gew.-%. Ganz besonders bevorzugte Zusammensetzungen enthalten von 30 bis 80 Gew.-% Polymere.

### Komponente C

Als Komponente C enthalten die erfindungsgemäßen Zusammensetzungen partikelförmiges Trägermaterial, welches aus einem Sol des Trägermaterials erhältlich ist.

Metalloxide, vor allem Titandioxid oder Siliziumdioxid, aber auch Mischungen unterschiedlicher Metalloxide können als Komponente C eingesetzt werden.

Die Herstellung des partikelförmigen Trägermaterials kann nach dem sogenannten Sol-Gel-Verfahren erfolgen. Dieses Verfahren ist allgemein bekannt (siehe z.B. Brinker, Scherer: The Physics and Chemistry of Sol-Gel Processing, Academic Press 1990). Vorzugsweise werden Metallalkoxide, beispielsweise Titantetraalkoxide wie Titantetra-s-butylat, Titantetra-n-butylat oder Titantetraethylat oder Siliziumtetraalkoxide, z.B. Tetramethoxysilan, Siliziumtetrapropylat, bevorzugt Siliziumtetraethylat in einem geeigneten Lösungsmittel gelöst und mit Wasser versetzt. In ähnlicher Weise können auch Oligomerealkoxide des Titans oder Siliziums eingesetzt werden. Hier kommen z.B. Oligomere Titantetrabutylate oder entsprechende Siliziumtetraethylate in Betracht. Hierbei hydrolysieren und kondensieren die Metallalkoxide zu den entsprechenden Oxiden, die als Feststoff kolloidal in Lösung suspendiert, als sogenanntes Sol, vorliegen. Dieser Vorgang kann durch Säuren wie Salzsäure oder Essigsäure aber auch durch Basen katalysiert werden. Eine geeignete Base ist z.B. Natriumhydroxyd.

Im allgemeinen findet die Reaktion bei Temperaturen von 5 bis 80°C, bevorzugt von 25 bis 80°C statt. Die Partikelgröße läßt sich, wie allgemein bekannt, beispielsweise durch die Reaktionsparameter wie Temperatur, Druck, Rührgeschwindigkeit, Konzentration oder auch die Zugabereihenfolge steuern. Im allgemeinen weist das partikelförmige Trägermaterial Partikelgrößen (Zahlenmittelwert) von 2 bis 80 nm auf. Bevorzugt liegen die Partikelgrößen (Zahlenmittelwert) im Bereich von 2 bis 50 nm, insbesondere von 2 bis 20 nm. Als Lösungsmittel zur Herstellung der partikelförmigen Trägermaterialien eignen sich die in Verbindung mit der Herstellung der Komponente A genannten.

Die erfindungsgemäßen Zusammensetzungen enthalten in der Regel 1 bis 40 Gew.-% partikelförmiges Trägermaterial. Vorzugsweise beträgt der Anteil der Komponente C an den erfindungsgemäßen Zusammensetzungen von 1 bis 30, insbesondere von 5 bis 30 Gew.-%.

Neben den wesentlichen Komponenten A bis C können die erfindungsgemäßen Zusammensetzungen noch bis zu 10 Gew.-%, bevorzugt von 1 bis 5 Gew.-%, bezogen auf die Komponenten A bis C, weiterer Additive oder Verarbeitungshilfsmittel enthalten. Hierzu zählen vor allem alkohollösliche filmbildende Hilfsmittel oder auch Füllstoffe die die elektrischen oder magnetischen Eigenschaften der erfindungsgemäßen Zusammensetzungen beeinflussen. Hier sind beispielsweise ferroelektrische Füllstoffe wie Bariumtitanat oder faserförmige Ferromagnetika wie Fe₂O₃ oder Fe₃O₄ zu nennen.

Die Herstellung der erfindungsgemäßen Zusammensetzungen erfolgt in der Regel dadurch, daß ein Sol des partikelförmigen Trägermaterials hergestellt wird. Dies kann in Gegenwart der Polymeren B erfolgen. Die Komponente B kann aber auch nach Abschluß der Sol-Gel-Reaktion zugegeben werden. Die zu reduzierende homogene Lösung der Metallsalze wird im allgemeinen nach Abschluß der Sol-Gel-Reaktion zugefügt. Es ist aber auch möglich, die Metallsalze in fester Form zu dem Sol zuzugeben und homogen zu lösen. Die Reduktion der Metallsalze zu den Metallpartikeln findet in der Regel in Gegenwart des jeweiligen Lösungsmittels, der darin gelösten Polymeren sowie dem Sol des jeweiligen Trägermaterials statt. Anschließend kann das Lösungsmittel entfernt werden. Es ist jedoch auch möglich, das Lösungsmittel vor der Reduktion zu entfernen. Diese Verfahrensvariante kann insbesondere bei der photochemischen Reduktion der Metallsalze vorteilhaft sein.

Dabei hängt die Metallpartikelgröße von derjenigen des Trägermaterials C ab. Je kleiner die Partikelgröße des Trägermaterials, umso kleiner sind die Metallpartikel. Die Verteilung der Metallpartikel in den erfindungsgemäßen Zusammensetzungen ist in der Regel homogen oder annähernd homogen.

Die erfindungsgemäßen Zusammensetzungen zeichnen sich durch eine gute Verarbeitbarkeit sowie dadurch aus, daß die Metallpartikel keine bzw. nur eine sehr geringe Neigung zur Agglomeration zeigen.

Die erfindungsgemäßen Zusammensetzungen eignen sich vor allem zur Herstellung von Beschichtungen, z.B. für Anwendungen, in denen der Oberflächenwiderstand der Beschichtung gering sein muß. Dies kann beispielsweise auf dem Gebiet der Elektronik oder Elektrotechnik der Fall sein. Ferner eignen sich die erfindungsgemäßen Zusammensetzungen zur Herstellung von Lacken bzw. als Lackadditiv. Auch für Beschichtungen, die mittels Licht strukturiert werden können, können die erfindungsgemäßen Zusammensetzungen eingesetzt werden.

Oberflächen können beispielsweise dadurch mit den erfindungsgemäßen Zusammensetzungen beschichtet werden, daß das Sol des Trägermaterials zusammen mit den Polymeren und der Metallsalzlösung auf die entsprechende Oberfläche aufgebracht, das Lösungsmittel entfernt und anschließend die Reduktion, z.B. photochemisch, durchgeführt wird. Es ist aber auch möglich Beschichtungen dadurch herzustellen, daß die Zusammensetzungen nach der Reduktion und vor oder nach Entfernen des Lösungsmittels auf die zu beschichtende Oberfläche aufgebracht werden. Dies kann beispielsweise im Fall plattenförmiger Oberflächen durch ein Rakel oder im Fall zylinderförmiger Oberflächen durch einen wandgängigen Rotor geschehen. Bevorzugt werden Oberflächen durch Spincoaten beschichtet.

Darüber hinaus können die erfindungsgemäßen Zusammensetzungen zur Herstellung von Katalysatoren, z.B. zur Hydrierung, Dimerisierung oder auch Isomerisierung ungesättigter Olefine verwendet werden.

### Beispiele

### Anwendungstechnische Prüfungen

UV-Absorptionsspektren wurden mit dem UV/VIS-Spektrometer 8450 A der Firma Hewlett Packard aufgenommen.

Partikelgrößen wurden mittels elektronenmikroskopischer Aufnahme bestimmt.

Der Gehalt an Metallpartikeln wurde durch Veraschung der entsprechenden Zusammensetzungen bei 800°C ermittelt. Die Beschichtungen wurden mittels eines Spincoaters der Firma Mikasa bei 1500 Umdrehungen pro Minute und einer Aufschleuderzeit von 90 s auf ein ruhendes Substrat (Glasplättchen oder auch Siliziumwafer) hergestellt.

### Beispiel 1

### Herstellung des Trägermaterial-sols

### Lösung 1

4,24 g (0,02 mol) Tetraethoxysilan wurden in 20,3 g Ethanol gelöst, mit 0,77 g 1 gew.-%iger HCl versetzt und unter Rühren (400 Upm) und Rückfluß 3 Stunden hydrolysiert und kondensiert.

### Lösung 2

0,184 g (8,1 x 10⁻⁴ mol) Tetraethylorthotitanat und 3,0 g Polyvinylpyrrolidon, charakterisiert durch ein mittleres Molekulargewicht von Mₙ = 360 000 g/mol und M_{w} = 1,3 x 10⁶ g/mol (z.B. Handelsprodukt Polyvinylpyrrolidon K90 der Firma BASF) wurden in 20,3 g Ethanol homogen gelöst.

Lösung 1 und 2 wurden anschließend unter Rühren bei 400 Upm gemischt und 2 Stunden bei Raumtemperatur hydrolysiert.

### Herstellung der erfindungsgemäßen Zusammensetzung

Nach Abschluß der Sol-Gel-Reaktion wurden 0,75 g (4,4 mmol) Silbernitrat zugesetzt und homogen gelöst. Anschließend wurde das Substrat beschichtet, das Lösungsmittel durch Trocknen im Vakuum entfernt und 12 Stunden bei 23°C mit UV-Licht der Wellenlänge 365 nm belichtet.

Es wurde eine braungefärbte Beschichtung erhalten. Die entstandenen Silberpartikel zeigten das für Silber charakteristische UV-Absorptionsspektrum mit einem Absorptionsmaximum bei 450 nm. Die durchschnittliche Partikelgröße (Zahlenmittelwert) der Silberpartikel war 10 nm. Der Silbergehalt der Beschichtung lag bei 9,1 Gew.-% (91 % d. Th.).

### Beispiel 2

Beispiel 1 wurde wiederholt, jedoch wurden 0,86 g (2,2 mmol) HAuCl₄·3H₂O anstelle des Silbernitrats eingesetzt und die Beschichtung nur 6 Stunden belichtet. Die entstandenen Goldpartikel zeigten das für Gold charakteristische UV-Absorptionsspektrum mit einem Absorptionsmaximum bei 530 nm. Die durchschnittliche Partikelgröße (Zahlenmittelwert) der Goldpartikel war 5 nm. Der Goldgehalt der Beschichtung lag bei 7,8 Gew.-% (92 % d. Th.).

### Vergleichsbeispiel

Verwendung von partikelförmigem Trägermaterial, das nicht nach dem Sol-Gel-Verfahren hergestellt wurde.

24 mg (1,4·10⁻⁴ mol) Silbernitrat wurden in einer Mischung aus 40 g Wasser und 10 g Methanol bei Raumtemperatur unter Rühren gelöst. Zu dieser Lösung wurden 100 mg (1,25·10⁻³ mol) Titandioxid (Partikelgröße 10 bis 30 µm, sphärisch) gegeben. Die entstehende Suspension wurde mit Ammoniumhydroxyd auf einen pH-Wert von 11 eingestellt. Die Suspension wurde unter Bestrahlung (365 nm) gerührt.

Im Verlauf der Bestrahlung färbte sich die Aufschlämmung grau, beim Abschalten des Rührers setzte sich der entstandene Feststoff ab.

Elektronenmikroskopische Aufnahmen des getrockneten Feststoffes zeigten Titandioxidpartikel, die Oberflächlich mit Silber überzogen waren. Die Partikelgröße der Silberteilchen lag deutlich über 10 µm.

### Beispiel 3

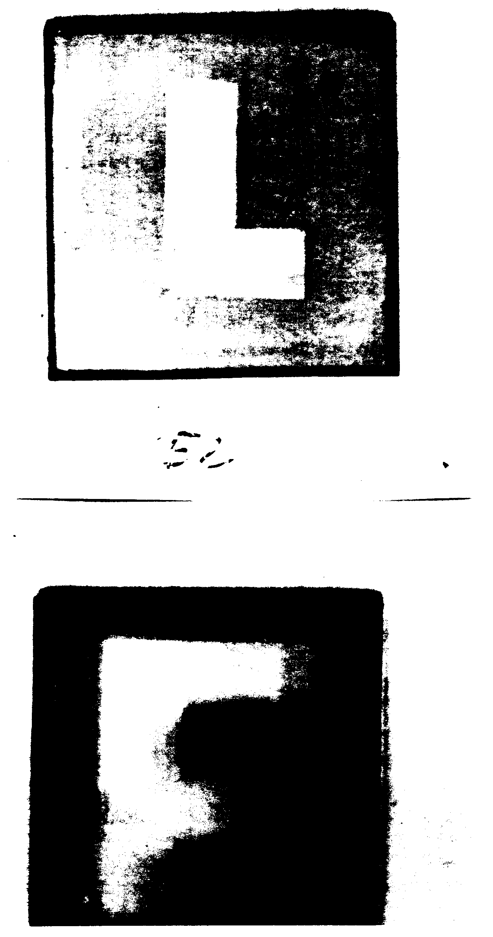

Beschichtungen, die gemäß Beispiel 1 oder 2 hergestellt wurden, wurden mit Schablonen abgedeckt und anschließend 4 Stunden mit UV-Licht der Wellenlänge 365 nm bestrahlt. An den abgedeckten Stellen blieb die Beschichtung farblos, während sie sich an den nicht abgedeckten Stellen infolge der Metallpartikelbildung verfärbte (s. Bild 1 und 2). UV-Spektroskopisch konnten an den abgedeckten Stellen Silber bzw. Gold nicht nachgewiesen werden, während die bestrahlten Stellen die charakteristischen UV-Spektren zeigten.

## Patentansprüche

1. Zusammensetzungen, enthaltend als wesentliche Komponenten
A) Metallpartikel eines mittleren Durchmessersvon weniger als 100 nm, berechnet als Zahlenmittelwert,
B) Polymere und
C) partikelförmiges Trägermaterial, erhältlich aus einem Sol des Trägermaterials.

2. Zusammensetzungen nach Anspruch 1, enthaltend
A) 1 bis 80 Gew.-% Metallpartikel
B) 1 bis 98 Gew.-% Polymere und
C) 1 bis 40 Gew.-% partikelförmige Trägermaterial.

3. Zusammensetzungen nach Anspruch 1 oder 2, enthaltend als Komponente A Metallpartikel, ausgewählt aus der Gruppe Gold, Silber, Platin, Palladium, Iridium, Rhenium, Eisen und deren Mischungen.

4. Zusammensetzungen nach einem der Ansprüche 1 bis 3, enthaltend als Komponente B Polymere, ausgewählt aus der Gruppe der Polyamide, Polystyrole, Polyacrylate, Polyvinylpyridine, Polyvinylpyrrolidone, Polyvinylacetate, Polxyoxyalkylene, Polyarylenether, deren Copolymeren und deren Mischungen.

5. Zusammensetzungen nach einem der Ansprüche 1 bis 4, enthaltend als Komponente B Polyvinylpyrrolidone.

6. Zusammensetzungen nach einem der Ansprüche 1 bis 5, enthaltend als Komponente C Siliziumdioxid oder Titandioxid oder deren Mischungen.

7. Zusammensetzungen, erhältlich durch die Reduktion von Metallsalzen zu Metallpartikeln in Gegenwart eines Lösungsmittels und darin gelösten Polymeren sowie eines Sols eines Trägermaterials.

8. Verfahren zur Herstellung von Zusammensetzungen, enthaltend als wesentliche Komponenten
A) Metallpartikel eines mittleren Durchmessers kleiner als 100 nm, berechnet als Zahlenmittelwert,
B) Polymere und
C) partikelförmiges Trägermaterial, erhältlich aus einem Sol des Trägermaterials,
dadurch gekennzeichnet, daß man Metallsalze in Gegenwart eines Lösungsmittels und darin gelösten Polymeren sowie eines Sols eines Trägermaterials zu Metallpartikeln reduziert.

9. Verwendung der Zusammensetzungen gemäß einem der Ansprüche 1 bis 7 zur Herstellung von Beschichtungen oder Katalysatoren.

10. Beschichtungen oder Katalysatoren, enthaltend Zusammensetzungen gemäß einem der Ansprüche 1 bis 7.
